(19) Europäisches Patentamt
European Patent Office
Office européen des brevets

(11) EP 0 529 458 B1

(12) **EUROPEAN PATENT SPECIFICATION**

(45) Date of publication and mention
of the grant of the patent:
**24.04.1996  Bulletin 1996/17**

(51) Int Cl.⁶: **G02B 21/24**, G02B 7/38

(21) Application number: **92113988.7**

(22) Date of filing: **17.08.1992**

(54) **An automatic focusing system**

Automatische Scharfstelleinrichtung

Système automatique de mise au point

(84) Designated Contracting States:
**DE FR GB NL**

(30) Priority: **22.08.1991  GB 9118124**

(43) Date of publication of application:
**03.03.1993  Bulletin 1993/09**

(73) Proprietor: **APPLIED IMAGING INTERNATIONAL
LTD.
Sunderland, Tyne & Wear SR5 3HD (GB)**

(72) Inventors:
• **Burgess, David Charles
  Altringham, Cheshire WA 15 8 TQ (GB)**
• **Stubbings, Clive Antony
  Cheshire WA13 9PL, (GB)**

• **Ginestet, Jacqueline
  Santa clara, California 95051 (US)**
• **Ravkin, Ilya
  Santa Clara, California 95051 (US)**

(74) Representative: **Frankland, Nigel Howard et al
FORRESTER & BOEHMERT
Franz-Joseph-Strasse 38
D-80801 München (DE)**

(56) References cited:
**EP-A- 0 163 394          DE-A- 3 739 223
US-A- 4 536 073**

• **PATENT ABSTRACTS OF JAPAN vol. 6, no. 225
(P-154)(1103) 10 November 1982 ; & JP-A-57 125
918**

## Description

The present invention relates to an automatic focusing system.

It has been proposed previously to provide an automatic focusing system, especially for use in focusing an image analysis system used to analyse the nature of cells present on a slide, which system effectively comprises a microscope.

Initial attempts at providing automatic focusing involved the use of a beam split attachment which split the image into three separate beams. Each respective part of the split beam was directed towards a respective image sensor. One sensor was located in the main focal plane of a relevant beam and the other two sensors were located respectively just short of and just behind the main focal plane of the respective beams. A focus error signal was then derived from the sensors, the signal consisting of a suitable non-linear function of illumination which favoured light/dark transitions at the edges of the objects and within objects. This signal was integrated for each sensor over the same field of view since, at any instant, the same image portion would be directed towards the three sensors. The integral would be a maximum for a sensor on which the image is sharply focused and the value of the integral provided by the two sensors which are equally out of focus would be the same. Consequently, the focusing of the arrangement could be adjusted so that the value of the integral derived from the main sensor would be at a maximum, and the value of the integrals obtained from the remaining two sensors would be equal.

Subsequently a modified automatic focusing arrangement was disclosed in European Patent Application 0163394A2. In this European Specification the focusing device comprises a sensor assembly having at least two arrays of sensor devices, with one array being in front of the optical image plane and the second array being behind the optical image plane. The sensor assembly has lines of pixel sensor elements. A differential contrast measure is taken from the pixel elements of the sensor which provides both the sign and magnitude of any focus error. This allows the focus motor to be driven in the correct direction. The differential contrast is calculated between one pixel and the next adjacent pixel. A contrast measure is taken from a selected number of pixels. The difference between the contrasted pixel values will be greater for an image in focus than for a blurred image. The difference between the selected pixels is measured, and the large values are enhanced, for example by raising the measured values to a power. The measured values, when raised to a power may be summed to provide an indication of how well focused the object is. Exaggerating the large values is necessary because when considering an out of focus image, a number of small differences may sum to a value similar to a large single difference obtained from an image in focus. The image is moved relative to the sensor assembly (or the sensor is moved relative to the image) so that the same image area may be sequentially directed towards the two arrays. Signals are derived from the two arrays to generate a focus drive signal. The sensor of European Publication 0163394A2 is provided in addition to two further outputs of a microscope, one comprising a binocular eye-piece tube, and the other being in the form of a camera port, although the camera port is not usually active. Thus a beam splitter is required and three beams are created within the microscope, each with its own focus plane.

DE-A-3,739,223 discloses a two-dimensional sensor array comprising a plurality of sensors adapted to sense the image, and an automatic focussing system. A complex optical element, comprising a combination of lenses, is inserted into a beam of light directed towards the sensor array. The lenses forming the optical element are formed of a transparent material of a predetermined refractive index.

The present invention seeks to provide an improved automatic focusing device.

According to this invention there is provided an automatic focusing system for focusing the image projected by a converging beam of light on the area defined by a two dimensional sensor array, said system including said array which comprises a plurality of sensors adapted to sense the incident beam of light for determining the state of focus of the image projected thereon, and an optical element inserted in the path of said converging beam of light directed towards the sensor array, the optical element extending transversely of the converging beam and comprising a transparent material of a predetermined refractive index, wherein the optical element presents at least one region of a predetermined thickness with parallel planar upper and lower surfaces through which a first part of the light beam passes and a further region of a greater predetermined thickness with parallel planar upper and lower surfaces through which a second part of the light beam passes, the image projected on the sensor array comprising three image areas, a first area defined by the image projected by said first part of the light beam , a second area defined by the image projected by said second part of the light beam , and a third area defined by the image projected by that part of the light beam that has not passed through the optical element. The element may be a single integral element or may comprise two element parts, one comprising said one region of a predetermined thickness and another comprising the said further region of greater predetermined thickness. The element may have three or more regions and may thus present a thin region, an intermediate region and a thick region.

Preferably the element is made of glass having a high refractive index, such as at least 1.5. The use of high refractive index glass minimises any "shadows" caused by discontinuities between the various regions of the element. In one embodiment the element has an overall configuration equivalent to a circle with a sector bounded by a straight edge being cut away, the said further region of greater thickness having the form of a sector of a circle of the same diameter with a straight edge, said straight edges being parallel.

In this embodiment the optical element may be mounted, preferably so that it can be adjusted rotationally, in the projection optics of microscope.

In an alternative embodiment of the invention the element is square or rectangular, and in this embodiment the element may be secured directly to a sensor array.

Preferably means are provided to determine the sharpness of the image in said second area and said third area of the image, and to perform an algorithm to control a focus adjusting mechanism so that the image is in focus in the said first area.

In a system in accordance with the invention, the sensor array is preferably adapted to provide an output representative of the focused image, the array developing said output from the said first area. It is thus to be understood that the sensor array may comprise the main output sensor array of a microscope or camera, for example. Consequently the focusing arrangement can be incorporated in the microscope or camera at minimal additional cost since no beam splitter is required and no separate sensor array is required.

In order that the invention may be more readily understood, and so that further features thereof may be appreciated, the invention will now be described, by way of example, with reference to the accompanying drawing in which

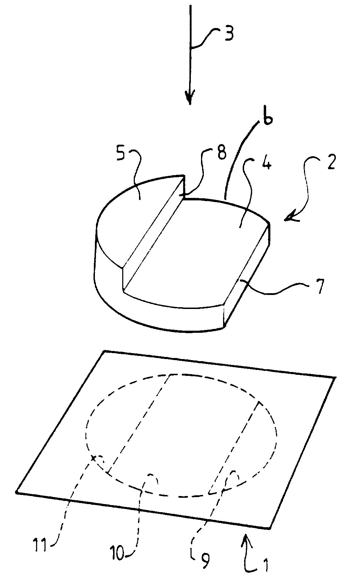

FIGURE 1 is a perspective view of a glass element and an imaging array which are intended to be fitted to a microscope.

Referring now to the drawing, it is to be appreciated that in an automatic focusing system in accordance with the invention, a single two dimensional imaging array 1 is intended to be utilised from which is developed image information for subsequent use and also information to facilitate a focusing of an associated optical system. The optical system includes an optical element 2 which serves the purpose of creating, in a single optical image, three areas of different respective focal planes.

It is to be understood that for a planar piece of glass placed into a converging light path, the position of focus is shifted by an amount of $(1-\frac{1}{N})T$ where N is the refractive index of the glass and T is the thickness of the piece of glass. Thus, for glass of a refractive index of 1.5 the shift in the focus is $(^1/_3)T$.

It has thus been realised that if part of an image passes through a piece of glass of a predetermined thickness, the position of focus of that path of the image will be shifted by a predetermined amount. Thus, the described embodiment of the invention provides an optical element 2 which consists of a piece of transparent glass to be located in position extending transversely of a converging beam as schematically illustrated by the arrow 3. The piece of glass, however, comprises a main region 4 of a predetermined thickness and another region 5 of a greater thickness. Preferably the thickness of the region 5 is twice the thickness of the region 4. The element 2 has a planar lower surface. Each region 4 and 5 has a planar upper surface which is parallel to the lower surface.

The optical element 2 is adapted to be designed so that only part of the optical beam 3 passes through the optical element 2. In the embodiment illustrated the optical element has an outer periphery of circular form with a segment cut off. Thus part of the circumference of the element is part circular 6, and part is bounded by a straight side 7. The region 5 which is of twice the thickness of the main region is also in the form of the segment of a circle, the circular part of the periphery of the region 5 being co-aligned with the circular periphery 6, the linear side 8 of the region 5 being substantially parallel with the said linear side 7. The linear side 8 is perpendicular to the upper surfaces of the regions 4 and 5. The region 5 is selected to be of a lesser size than the region 4.

It is to be appreciated that a light beam 3 passing through the optical element 2 will impinge upon the detector 1 in three distinct areas. In the first area 9 the light will not have passed through the optical element and will thus have a nominal focal plane. In the second area 10, the light will have passed through the main region 4 of the optical element and will have an optical plane shifted by $^1/_3T$ if the refractive index of the glass is 1.5 and the thickness of the region 4 is T. In the area 11 of the image, the beam has passed through the region 5 of the optical element and thus the focal plane will be shifted by $^2/_3T$. Thus, if the focusing arrangement is so adjusted that the image in the area 10, passing through the single thickness of glass in the region 4 of the optical element 2 is in focus in the plane of the sensor array 2, the image in the area 9 will be focused $^1/_3T$ on one side of the image plane and the image in the area 11 will be focused $^1/_3T$ on the other side of the image plane. A focusing algorithm as disclosed in European Publication 0163394A2 may then be used to derive an error focus correction signal. In that algorithm the image and the sensor moved relative to one another so that the same image area was used in the two areas optically behind and in front of the focal plane. In contrast, in the described embodiment of the invention, different areas of the image will be present in the different areas 9, 10 and 11 on the sensor array. It is, however, believed that, notwithstanding the fact that different image areas are present, the focusing algorithm will operate in a satisfactory manner.

The optical element 2 is intended to be located at a spaced position from the image array 1, for example, at the projection optics field stop. It is to be understood that the optical element should be mounted at, or near to, a focal plane in the optical path. The element 2 is preferably mounted so that it can be adjusted rotationally to have the desired position, with the linear sides aligned with rows of pixels in the sensor array.

In an alternative embodiment of the invention, the optical element may be of rectangular form, so that it can be adhered directly to the optical array. When the optical element is adhered to the sensor array care must be taken to ensure that the linear sides (equivalent to the sides 7 and 8) are aligned with the rows of pixels present in the sensor array.

It is preferred to utilise glass having as high a refractive index as possible. This results in the regions 4 and 5 being as thin as practicable. This means that the vertical step between the regions is as small as possible, whilst still maintaining the desired focus separation. This minimises any shadows which can otherwise be developed from the side edges 7 and 8 which effectively cause discontinuities. Any shadows can also be minimised by making these edges to be of as high a quality as possible. Edges which are in any way rough or irregular will lead to the creation of shadows.

While the invention has been described with reference to a microscope it is to be appreciated that the invention may find many different applications. Many modifications may be effected without departing from the scope of the invention as defined in the following Claims.

## Claims

1. An automatic focusing system for focusing the image projected by a converging beam of light on the area defined by a two dimensional sensor array (1), said system including said array(1) which comprises a plurality of sensors adapted to sense the incident beam of light for determining the state of focus of the image projected thereon, and an optical element(2) inserted in the path of said converging beam of light(3) directed towards the sensor array (1), the optical element extending transversely of the converging beam and comprising a transparent material of a predetermined refractive index, characterised in that the optical element(2) presents at least one region(4) of a predetermined thickness with parallel planar upper and lower surfaces through which a first part of the light beam passes and a further region(5) of a greater predetermined thickness with parallel planar upper and lower surfaces through which a second part of the light beam passes, the image projected on the sensor array(1) comprising three image areas, a first area(10) defined by the image projected by said first part of the light beam, a second area(11) defined by the image projected by said second part of the light beam , and a third area(9) defined by the image projected by that part of the light beam that has not passed through the optical element.

2. A system according to Claim 1 wherein said optical element(2) is made of glass having a high refractive index.

3. A system according to Claim 2 wherein the refractive index of the glass is at least 1.5.

4. A system according to any one of the preceding Claims wherein said optical element(2) has an overall configuration equivalent to a circle(6) with a sector bounded by a straight edge (7) being cut away, the said further region of greater thickness(5) having the form of a sector of a circle of the same diameter, with a straight edge(8), the said straight edges (7,8) being parallel.

5. A system according to any one of the preceding Claims embodied in a microscope, the said optical element being mounted in the projection optics of the microscope.

6. A system according to Claim 5 wherein said optical element(2) is mounted so that it can be adjusted rotationally.

7. A system according to any one of Claims 1 to 3 wherein said optical element is square or rectangular.

8. A system according to Claim 7 wherein said optical element(2) is secured directly to the sensor array (1).

9. A system according to any one of the preceding Claims wherein means are provided to determine the sharpness of the image in said second area(11) and said third area(9) of the image, and to perform an algorithm to control a focus adjusting mechanism so that the image is in focus in the said first area(10).

10. A system according to any one of the preceding Claims wherein the sensor array is adapted to provide an output representative of the focused image, the array developing the said output from said first area(10).

## Patentansprüche

1. Automatisches Pokusiersystem zum Pokusieren des Bildes, das von einem konvergierenden Lichtstrahl (3) auf den Bereich projiziert wird, der durch ein zweidimensionales Sensorfeld (1) festgelegt ist, wobei besagtes System besagtes Feld (1) enthält, das eine Vielzahl von Sensoren, die den einfallenden Lichtstrahl zum Bestimmen des Fokuszustandes des darauf projizierten Bildes abfühlen können, und ein optisches Element (2) umfaßt, das in dem Gang besagten konvergierenden Lichtstrahls (3), der auf das Sensorfeld (1) geführt wird, eingefügt ist, wobei sich das optische Element quer zu dem konvergierenden Strahl ausbreitet und ein transparentes Material mit einem vorherbestimmten Brechungsindex umfaßt, dadurch gekennzeichnet, daß das optische Element (2) zumindest eine Zone (4) einer vorherbestimmten Dicke mit parallelen, planaren oberen und unteren Flächen darbietet, durch welche ein erster Teil des Lichtstrahls hindurchtritt, und eine weitere Zone (5) einer größeren vorherbestimmten Dicke mit parallelen, planaren oberen und unteren Flachen darbietet, durch welche ein zweiter Teil des Lichtstrahls hindurchtritt, wobei das auf das Sensorfeld (1) projizierte Bild drei Bildbereiche umfaßt, einen ersten Bereich (10), der durch das von besagtem ersten Teil des Lichtstrahls projizierte Bild festgelegt ist, einen zweiten Bereich (11), der durch das von dem zweiten Teil des Lichtstrahls projizierte Bild festgelegt ist, und einen dritten Bereich (9), der durch das von dem Teil des Lichtstrahls projizierte Bild festgelegt ist, der nicht durch das optische Element hindurchgetreten ist.

2. System nach Anspruch 1, dadurch gekennzeichnet, das besagtes optische Element (2) aus Glas hergestellt ist, das einen hohen Brechungsindex aufweist.

3. System nach Anspruch 2, dadurch gekennzeichnet, daß der Brechungsindex des Glases zumindest 1,5 beträgt.

4. System nach irgendeinem der vorangegangenen Ansprüche, dadurch gekennzeichnet, daß besagtes optische Element (2) eine komplette Konfiguration aufweist, die einem Kreis (6) mit einem durch eine gerade Kante (7) begrenzten, weggeschnittenen Sektor entspricht, wobei besagter weitere Bereich größerer Dicke (5) die Form eines Kreissektors mit dem gleichen Durchmesser und einer geraden Kante (8) aufweist, wobei besagte gerade Kanten (7, 8) parallel sind.

5. System nach irgendeinem der vorangegangenen Ansprüche, das in einem Mikroskop ausgeführt ist, wobei besagtes optische Element in den Projektionsoptiken des Mikroskops angebracht ist.

6. System nach Anspruch 5, dadurch gekennzeichnet, daß besagtes optische Element (2) so angebracht ist, daß es rotationsmäßig einstellbar ist.

7. System nach irgendeinem der Ansprüche 1 bis 3, dadurch gekennzeichnet, daß besagtes optische Element quadratisch oder rechteckig ist.

8. System nach Anspruch 7, dadurch gekennzeichnet, daß besagtes optische Element (2) direkt an dem Sensorfeld (1) befestigt ist.

9. System nach irgendeinem der vorangegangenen Ansprüche, dadurch gekennzeichnet, daß Mittel zum Bestimmen der Schärfe des Bildes in besagtem zweiten Bereich (11) und besagtem dritten Bereich (9) des Bildes und zum Durchführen eines Algorithmus zum Steuern eines Fokuseinstellmechanismus bereitgestellt sind, so daß das Bild in dem besagten ersten Bereich (10) im Fokus ist.

10. System nach irgendeinem der vorangegangenen Ansprüche, dadurch gekennzeichnet, daß das Sensorfeld ein Ausgabesignal liefern kann, das für das fokusierte Bild repräsentativ ist, wobei das Feld das besagte Ausgabesignal von besagtem ersten Bereich (10) entwickelt.

**Revendications**

1. Un système de mise au point automatique, pour mettre au point l'image, projetée par un faisceau convergent de lumière (3) sur la zone définie par un réseau de capteurs à deux dimensions (1), ledit système incluant ledit réseau (1), qui comprend plusieurs capteurs, adaptés pour capter le faisceau de lumière incident, afin de déterminer la netteté de l'image projetée sur ceux-ci, et un élément optique, inséré sur le chemin dudit faisceau convergent de lumière (3) dirigé vers le réseau de capteurs (1), l'élément optique, s'étendant transversalement au faisceau convergent et comprenant un matériau transparent d'un indice de réfraction prédéterminé, caractérisé en ce que l'élément optique (2) présente au moins une région (4) d'une épaisseur prédéterminée, avec des surfaces parallèles planes, supérieure et inférieure, au travers desquelles une première partie du faisceau de lumière passe, et une région plus éloignée (5), d'une épaisseur prédéterminée supérieure, avec des surfaces parallèles planes, supérieure et inférieure, au travers desquelles une seconde partie du faisceau de lumière passe, l'image projetée sur le réseau de capteurs (1) comprenant trois zones d'image, une première zone (10), définie par l'image projetée par ladite première partie du faisceau de lumière, une seconde zone (11), définie par l'image projetée par ladite seçonde partie du faisceau de lumière, et une troisième zone (9), définie par l'image projetée par la partie du faisceau de lumière qui n'a pas traversé l'élément optique.

2. Un système selon la revendication 1, dans lequel ledit élément optique (2) est fabriqué dans un verre ayant un indice de réfraction élevé.

3. Un système selon la revendication 2, dans lequel l'Indice de réfraction du verre est au moins 1.5.

4. Un système selon une quelconque des revendications précédentes, dans lequel ledit élément optique (2) a une configuration d'ensemble équivalente à un cercle (6) avec un secteur limité par une arête rectiligne (7) coupée, ladite région éloignée d'épaisseur supérieure (5) ayant la forme d'un secteur d'un cercle de même diamètre, avec une arête rectiligne (8), lesdits bords (7) et (8) étant parallèles.

5. Un système selon une quelconque des revendications précédentes, intégré à un microscope, ledit élément optique étant monté dans l'optique de projection du microscope;

6. Un système selon la revendication 5, dans lequel ledit élément optique (2) est monté de sorte qu'il puisse être réglé en rotation.

7. Un système selon une quelconque des revendications 1 à 3, dont lequel ledit élément optique est carré ou rectangulaire.

8. Un système selon la revendication 7, dans lequel ledit élément optique (2) est attaché directement au réseau de capteurs (1).

9. Un système selon une quelconque des revendications précédentes, dans lequel des moyens sont fournis pour déterminer la netteté de l'image dans ladite seconde zone (11) et ladite troisième zone (9) de l'image, et pour réaliser un algorithme de contrôle d'un mécanisme d'ajustage de la mise au point, de sorte que l'image soit nette dans ladite première zone (10).

10. Un système selon une quelconque des revondications précédentes, dans lequel le réseau de capteurs est adapté pour fournir une sortie représentative de l'image mise au point, l'ensemble formant ladite sortie à partir de ladite première zone (10).